# EUROPEAN PATENT APPLICATION

(11) **EP 4 418 189 A1**
(43) Date of publication of application: **21.08.2024**
(21) Application number: 24156552.2
(22) Date of filing: 08.02.2024
(51) Int. Cl.: G06Q 30/04, G06Q 50/06

(54) **ACQUIRING TIME FOR AN ELECTRIC VEHICLE SUPPLY EQUIPMENT (EVSE) BASED ON A SHORT-RANGE WIRELESS COMMUNICATION-BASED AUTOMATED PROCESS**

(30) Priority: 14.02.2023 US 202318168914
(71) Applicant: Siemens Aktiengesellschaft, 80333 München (DE)
(72) Inventor: Feldman, Daniel, New York, NY, 10022 (US); Yeruva, Sesha Devasena, Duluth, GA, 30096 (US); Heyne, Jean-Christoph, 90425 Nürnberg (DE)
(74) Representative: Isarpatent

(57) **Abstract**

Systems and methods are provided for Electric Vehicle Supply Equipment (EVSE) system clock time synchronization based on a short-range wireless communication-based automated process. A system comprises a cellular mobile device having a short-range wireless communication capability to communicate with one or more EVSEs. The system further comprises a smart EVSE capable of gaining network connectivity, maintaining an EVSE system clock, and storing multiple days or months interval data logs and charging session data in order to provide reporting to a utility that allows retroactively calculating meter data and performing accurate billing to its customers such that the smart EVSE to synchronize time if power is lost when the network connectivity is down and to retrieve the interval data logs and the charging session data for updating to a cloud automatically to gain network connectivity for gaining an ability to perform Network Time Protocol (NTP) synchronization of the EVSE system clock.

## Description

### BACKGROUND

### 1. Field

Aspects of the present invention generally relate to acquiring time for an Electric Vehicle Supply Equipment (EVSE) based on a short-range wireless communication-based automated process.

### 2. Description of the Related Art

Unlike gas-powered vehicles, electric vehicles (EVs) do not require internal combustion engines to operate. Outfitted with an electric motor and a rechargeable battery pack, EVs move along our roadways without burning up gasoline, or producing harmful exhaust emissions, while generating less noise pollution. The world of transportation continues to rapidly evolve. Sales of electric vehicles (EVs) are expected to expand rapidly in the US in the coming years. Economics aside, there are growing social and political initiatives toward "clean" energy that will push this to become reality. A number of market forecasts indicate electric vehicles will account for nearly 1 in 5 of all vehicles sold within the next 10 years. It is estimated approximately 3 million EVs will be sold in the US in 2028. A rule of thumb by industry analysts is there need be on the order of 20 public EVC stations per EV on the road to support the ecosystem. There were just over 60,000 charging stations in the US at the end of 2019. Thus, tens of thousands will need to be deployed every year for some time as the market grows.

Charging stations have provided hundreds of millions of charges to EV (electric vehicle) drivers worldwide. When it comes to electric vehicles, the converter is built inside the car. It's called the "onboard charger" though it really is a converter. It converts power from AC to DC and then feeds it into the car's battery. This is the most common charging method for electric vehicles today and most chargers use AC power.

An EV is connected to AC power, 120V or 240V, and a battery charger in the EV converts the AC power to the DC needed to charge the battery and controls the charging process. In DCFC the DCFC converts the AC power to DC and the DC power is sent directly to the EV battery bypassing the onboard battery charger. There are three categories or types of charging: Trickle Charge, AC Charge and DC Charge. Most drivers of electric vehicles (EVs)-which include all-electric vehicles and plug-in hybrid electric vehicles (PHEVs)-charge their vehicles overnight at home using AC Level 1 or AC Level 2 charging equipment.

A charging station, also known as a charge point or electric vehicle supply equipment (EVSE), is a piece of equipment that supplies electrical power for charging plug-in electric vehicles (including electric cars, electric trucks, electric buses, neighborhood electric vehicles, and plug-in hybrids). There are two main types: AC charging stations and DC fast chargers. Batteries can only be charged with direct current (DC) electric power, while most electricity is delivered from the power grid as alternating current (AC). For this reason, most electric vehicles have an onboard charger with an AC-to-DC converter (a rectifier). At an AC charging station, power is supplied to the onboard charger.

EVSEs in many instances have accurate metering capabilities, and therefore can be used for sub-metering applications. When deployed in residential applications, EVSEs are typically connected to a network via a user Wi-Fi^{®} network, which may have intermittent connectivity. It is therefore a common requirement for EVSEs to store up to 90 days of 15-minute interval data and charging session data in order to provide reporting to a utility that allows retroactively calculating meter data and performing accurate billing to its customers, particularly when the energy rates for EV charging are different than for the rest of the residence. Issues:
a. EVSEs are normally not built with clocks that have a high holdover. Therefore, loosing network connectivity means losing the ability to perform Network Time Protocol (NTP) synchronization, which means an EVSE system clock can drift by minutes and then hours, over the course of 90 days.
b. EVSEs are normally not built with internal batteries to keep the system clock in case of a power failure. Therefore, if power is lost when connectivity is down, the EVSE will lose its system clock (normally reverting to January 1st, 1970). If a single power cycle occurs without the network connectivity, once connectivity is restored it is possible to retroactively change the information tracked based on the difference between the clock acquired through NTP and the date/time the system believed to be in, but if multiple power failures occur, it is impossible to perform this simple correction. It is an unsolved problem. Utilities do not have access to an accurate data when connectivity is power and there are power failures.

Therefore, there is a need for a system and a method to properly acquire time for an Electric Vehicle Supply Equipment (EVSE).

### SUMMARY

Briefly described, aspects of the present invention relate to acquiring time for an Electric Vehicle Supply Equipment (EVSE) based on a short-range wireless communication-based automated process. Use of a cellphone Bluetooth is disclosed to synchronize time and to retrieve 15-minute interval data logs for update to the cloud automatically. Time synchronization can also be done via an electric vehicle (EV) Bluetooth. Alternatively, EVSE system clock time synchronization can be done with ZigBee or other wireless interfaces between the EV and the EVSE. An authentication process can be needed to synchronize time and upload data to also automatically unlock the charger for charging, eliminating the need for the driver to touch the phone.

In accordance with one illustrative embodiment of the present invention, a system for is provided for acquiring time for an Electric Vehicle Supply Equipment (EVSE) based on a short-range wireless communication-based automated process. The system comprises a cellular mobile device having a short-range wireless communication capability to communicate on a wireless network with one or more EVSEs that are configured to charge an electric vehicle (EV) of a user. The system further comprises a smart EVSE communicatively coupled to the cellular mobile device of the user. The smart EVSE is capable of gaining network connectivity, maintaining an EVSE system clock, and storing multiple days or months interval data logs and charging session data in order to provide reporting to a utility that allows retroactively calculating meter data and performing accurate billing to its customers such that the smart EVSE comprising: a processor; and a memory storing instructions that, when executed by the processor, cause the smart EVSE to: use the short-range wireless communication capability of the cellular mobile device to synchronize time if power is lost when the network connectivity is down and to retrieve the interval data logs and the charging session data for updating to a cloud automatically to gain network connectivity for gaining an ability to perform Network Time Protocol (NTP) synchronization of the EVSE system clock.

In accordance with one illustrative embodiment of the present invention, a method is provided for acquiring time for an Electric Vehicle Supply Equipment (EVSE) based on a short-range wireless communication-based automated process. The method comprises providing a cellular mobile device having a short-range wireless communication capability to communicate on a wireless network with one or more EVSEs that are configured to charge an electric vehicle (EV) of a user. The method further comprises providing a smart EVSE communicatively coupled to the cellular mobile device of the user. The smart EVSE is capable of gaining network connectivity, maintaining an EVSE system clock, and storing multiple days or months interval data logs and charging session data in order to provide reporting to a utility that allows retroactively calculating meter data and performing accurate billing to its customers such that the smart EVSE comprising: a processor; and a memory storing instructions that, when executed by the processor, cause the smart EVSE to: use the short-range wireless communication capability of the cellular mobile device to synchronize time if power is lost when the network connectivity is down and to retrieve the interval data logs and the charging session data for updating to a cloud automatically to gain network connectivity for gaining an ability to perform Network Time Protocol (NTP) synchronization of the EVSE system clock.

The above described features and advantages, as well as others, will become more readily apparent to those of ordinary skill in the art by reference to the following detailed description and accompanying drawings. While it would be desirable to provide one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates a system for acquiring time for an Electric Vehicle Supply Equipment (EVSE) based on a short-range wireless communication-based automated process in accordance with a first embodiment of the present invention.
FIG. 2 illustrates a schematic view of a flow chart of a method for acquiring time for an Electric Vehicle Supply Equipment (EVSE) based on a short-range wireless communication-based automated process in accordance with an embodiment of the present invention.

### DETAILED DESCRIPTION

Various technologies that pertain to systems and methods that acquire time for an Electric Vehicle Supply Equipment (EVSE) based on a short-range wireless communication-based automated process are presented. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

To facilitate an understanding of embodiments, principles, and features of the present invention, they are explained hereinafter with reference to implementation in illustrative embodiments. In particular, they are described in the context of an EVSE system clock time synchronization system and a method that can acquire time for an EVSE based on a short-range wireless communication-based automated process. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

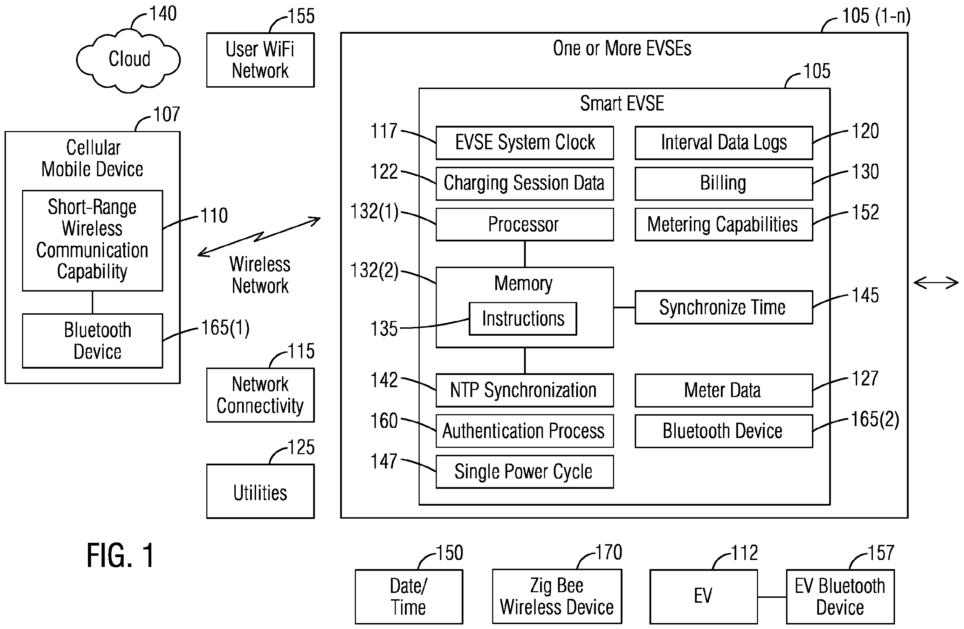

These and other embodiments of the EVSE system clock time synchronization system according to the present disclosure are described below with reference to FIGs. 1-2 herein. Like reference numerals used in the drawings identify similar or identical elements throughout the several views. The drawings are not necessarily drawn to scale.

The term electric vehicle (EV), as used herein, refers to a motorized vehicle deriving locomotive power, either full-time or part-time, from an electric system on board the motorized vehicle. By way of non-limiting examples, an EV may be an electrically powered passenger vehicle for road use; an electric scooter; an electric fork lift; a cargo-carrying vehicle powered, full-time or part-time, by electricity; an off-road electrically powered vehicle; an electrically powered watercraft; etc.

The term electric vehicle supply equipment (EVSE), as used herein, refers to equipment by which an EV may be charged or recharged. An EVSE may comprise or be coupled to a computing system whereby service to the EV is provisioned, optionally, according to parameters. In some embodiments, values for the parameters are operator-selectable. Alternatively, or in addition, the values for the parameters may be automatically selected. An EVSE may comprise a means of providing cost accounting, and may further comprise a payment acceptance component. An EVSE may be installed at a home or residence of an owner/operator of an EV, at a place of business for an owner/operator of an EV, at a fleet facility for a fleet comprising one or more EVs, at a public charging station, etc. The present disclosure uses the terms EVSE and "charging station," where for purposes of this disclosure, an EVSE is an example of a charging station.

An EVSE may be portable such that it can be brought by a user to various locations and used to charge an EV. For example, a user may install and use an EVSE at home to charge an EV. The user may then travel to a friend or family member's home, bringing the EVSE, and install and use the EVSE to charge the EV at the friend or family member's home.

The EVSE can be installed by connecting a plug of the EVSE to an electrical outlet at the installation location. The EVSE may then be used to deliver electricity to an EV for charging. However, electrical conditions may vary based on the installation location, which may impact EVSE performance, and the EVSE may need to be configured at different installation locations. Configuring the EVSE may be time and/or labor intensive, but improper configuring can be detrimental. For example, a maximum current delivered by the EVSE may vary based on the electrical conditions where the EVSE is installed, so the EVSE may need to be configured to determine a correct maximum current. Otherwise, use of the EVSE having an improper configuration may cause an electrical fault, tripping a circuit breaker of the installation location and disrupting charging. Accordingly, embodiments of the present disclosure relate to techniques for determining an EVSE configuration at each location where an EVSE is installed.

Consistent with one embodiment of the present invention, FIG. 1 represents a system 102 for a system clock time synchronization in accordance with a first embodiment of the present invention. The system 102 is configured to acquire time for a smart Electric Vehicle Supply Equipment (EVSE) 105 based on a short-range wireless communication-based automated process. The system 102 comprises a cellular mobile device 107 having a short-range wireless communication capability 110 to communicate on a wireless network with one or more EVSEs 105(1-n) that are configured to charge an electric vehicle (EV) 112 of a user.

The system 102 further comprises the smart EVSE 105 communicatively coupled to the cellular mobile device 107 of the user. The smart EVSE 105 is capable of gaining network connectivity 115, maintaining an EVSE system clock 117, and storing multiple days or months interval data logs 120 and charging session data 122 in order to provide reporting to a utility 125 that allows retroactively calculating meter data 127 and performing accurate billing 130 to its customers. The smart EVSE 105 comprises a processor 132(1) and a memory 132(2) storing instructions 135 that, when executed by the processor 132(1), cause the smart EVSE 105 to: use the short-range wireless communication capability 110 of the cellular mobile device 107 to synchronize time 145 if power is lost when the network connectivity 115 is down and to retrieve the interval data logs 120 and the charging session data 122 for updating to a cloud 140 automatically to gain network connectivity 115 for gaining an ability to perform Network Time Protocol (NTP) synchronization 142 of the EVSE system clock 117.

Network Time Protocol (NTP) is an internet protocol used to synchronize with computer clock time sources in a network. It belongs to and is one of the oldest parts of the TCP/IP suite. The term NTP applies to both the protocol and the client-server programs that run on computers. In order to synchronize all of a EVSE's operations, the EVSE system clock 117-a small quartz crystal located on a motherboard-is used. The EVSE system clock 117 sends out a signal on a regular basis to all other EVSE components.

If a single power cycle 147 occurs without network connectivity, once the network connectivity 115 is restored it is possible to retroactively change information tracked based on a difference between a clock acquired through the NTP synchronization 142 and a date/time 150 of the system 102 believed to be in. The utilities 125 have access to an accurate data when the network connectivity 115 is power and there are power failures.

The EVSE system clock 117 will not drift by minutes or hours over the course of 90 days. The smart EVSE 105 will have accurate metering capabilities 152, and therefore can be used for sub-metering applications. The EVSE 105 is configured to be connected to a network via a user Wi-Fi^{®} network 155 and store up to 90 days of 15-minute interval data and charging session data.

The system 102 further comprises an EV Bluetooth^{®} device 157 of the EV 112 which is to be used instead of the short-range wireless communication capability 110 of the cellular mobile device 107. The smart EVSE 105 is configured to use an authentication process 160 that is needed to synchronize time 145 and upload data to also automatically unlock the smart EVSE 105 for charging.

The short-range wireless communication capability 110 of the cellular mobile device 107 provides a solution for the issue of dealing with poor connectivity/clock drift and power cycles. The short-range wireless communication capability 110 of the cellular mobile device 107 is based on a Bluetooth^{®} device 165(1), a Bluetooth^{®} device 165(2) or a ZigBee^{®} wireless interface 170 between the EV 112 and the smart EVSE 105.

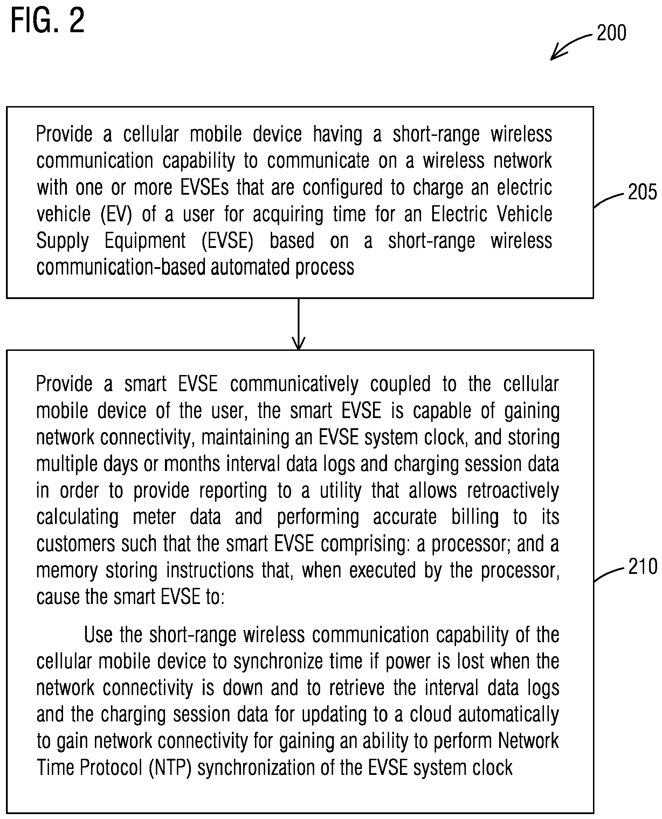

Referring to FIG. 2, it illustrates a schematic view of a flow chart of a method 200 for acquiring time for the smart Electric Vehicle Supply Equipment (EVSE) 105 based on a short-range wireless communication-based automated process in accordance with an embodiment of the present invention. Reference is made to the elements and features described in FIG. 1. It should be appreciated that some steps are not required to be performed in any particular order, and that some steps are optional.

The method 200 comprises a step 205 of providing a cellular mobile device having a short-range wireless communication capability to communicate on a wireless network with one or more EVSEs that are configured to charge an electric vehicle (EV) of a user for acquiring time for an Electric Vehicle Supply Equipment (EVSE) based on a short-range wireless communication-based automated process. The method 200 further comprises a step 210 of providing a smart EVSE communicatively coupled to the cellular mobile device of the user, the smart EVSE is capable of gaining network connectivity, maintaining an EVSE system clock, and storing multiple days or months interval data logs and charging session data in order to provide reporting to a utility that allows retroactively calculating meter data and performing accurate billing to its customers such that the smart EVSE comprising: a processor; and a memory storing instructions that, when executed by the processor, cause the smart EVSE to: use the short-range wireless communication capability of the cellular mobile device to synchronize time if power is lost when the network connectivity is down and to retrieve the interval data logs and the charging session data for updating to a cloud automatically to gain network connectivity for gaining an ability to perform Network Time Protocol (NTP) synchronization of the EVSE system clock.

While a design based on a short-range wireless communication capability according to a Bluetooth protocol is described here a range of one or more other short-range wireless communication protocols are also contemplated by the present invention. For example, other short-range wireless communication protocols such as a ZigBee protocol may be implemented based on one or more features presented above without deviating from the spirit of the present invention.

The techniques described herein can be particularly useful for Network Time Protocol (NTP) synchronization. While particular embodiments are described in terms of Network Time Protocol (NTP) synchronization, the techniques described herein are not limited to such Network Time Protocol (NTP) synchronization but can also be used with other Time synchronization.

While embodiments of the present invention have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

## Claims

1. A system for acquiring time for an Electric Vehicle Supply Equipment (EVSE) based on a short-range wireless communication-based automated process, the system comprising:
a cellular mobile device having a short-range wireless communication capability to communicate on a wireless network with one or more EVSEs that are configured to charge an electric vehicle (EV) of a user; and
a smart EVSE communicatively coupled to the cellular mobile device of the user, the smart EVSE is capable of gaining network connectivity, maintaining an EVSE system clock, and storing multiple days or months interval data logs and charging session data in order to provide reporting to a utility that allows retroactively calculating meter data and performing accurate billing to its customers such that the smart EVSE comprising: a processor; and a memory storing instructions that, when executed by the processor, cause the smart EVSE to:
use the short-range wireless communication capability of the cellular mobile device to synchronize time if power is lost when the network connectivity is down and to retrieve the interval data logs and the charging session data for updating to a cloud automatically to gain network connectivity for gaining an ability to perform Network *Time* Protocol (*NTP*) synchronization of the EVSE system clock.

2. The system of claim 1, wherein if a single power cycle occurs without network connectivity, once the network connectivity is restored it is possible to retroactively change information tracked based on a difference between a clock acquired through NTP and a date/time of the system believed to be in.

3. The system according to any of the preceding claims, wherein utilities have access to an accurate data when the network connectivity is power and there are power failures.

4. The system according to any of the preceding claims, wherein the EVSE system clock will not drift by minutes or hours over the course of 90 days.

5. The system according to any of the preceding claims, wherein the smart EVSE will have accurate metering capabilities, and therefore can be used for sub-metering applications.

6. The system according to any of the preceding claims, wherein the EVSE is configured to be connected to a network via a user Wi-Fi^{®} network and store up to 90 days of 15-minute interval data and charging session data.

7. The system according to any of the preceding claims, further comprising:
an EV Bluetooth^{®} device of the EV which is to be used instead of the short-range wireless communication capability of the cellular mobile device.

8. The system according to any of the preceding claims, wherein the smart EVSE is configured to use an authentication process that is needed to synchronize time and upload data to also automatically unlock the smart EVSE for charging.

9. The system according to any of the preceding claims, wherein the short-range wireless communication capability of the cellular mobile device provides a solution for the issue of dealing with poor connectivity/clock drift and power cycles.

10. The system according to any of the preceding claims, wherein the short-range wireless communication capability of the cellular mobile device is based on a Bluetooth^{®} device or a ZigBee^{®} wireless interface between the EV and the smart EVSE.

11. A method for acquiring time for an Electric Vehicle Supply Equipment (EVSE) based on a short-range wireless communication-based automated process, in particular for a system for acquiring time for an Electric Vehicle Supply Equipment (EVSE) according to any of the claims 1 to 10, the method comprising:
providing a cellular mobile device having a short-range wireless communication capability to communicate on a wireless network with one or more EVSEs that are configured to charge an electric vehicle (EV) of a user; and
providing a smart EVSE communicatively coupled to the cellular mobile device of the user, the smart EVSE is capable of gaining network connectivity, maintaining an EVSE system clock, and storing multiple days or months interval data logs and charging session data in order to provide reporting to a utility that allows retroactively calculating meter data and performing accurate billing to its customers such that the smart EVSE comprising: a processor; and a memory storing instructions that, when executed by the processor, cause the smart EVSE to:
use the short-range wireless communication capability of the cellular mobile device to synchronize time if power is lost when the network connectivity is down and to retrieve the interval data logs and the charging session data for updating to a cloud automatically to gain network connectivity for gaining an ability to perform Network *Time* Protocol (*NTP*) synchronization of the EVSE system clock.

12. The method of claim 11, wherein if a single power cycle occurs without network connectivity, once the network connectivity is restored it is possible to retroactively change information tracked based on a difference between a clock acquired through NTP and a date/time of a system believed to be in.

13. The method according to any of the preceding method-based claims,
wherein utilities have access to an accurate data when the network connectivity is power and there are power failures; and/or
wherein the EVSE system clock will not drift by minutes or hours over the course of 90 days; and/or
wherein the smart EVSE will have accurate metering capabilities, and therefore can be used for sub-metering applications; and/or
wherein the EVSE is configured to be connected to a network via a user Wi-Fi^{®} network and store up to 90 days of 15-minute interval data and charging session data.

14. The method according to any of the preceding method-based claims, further comprising:
providing an EV Bluetooth^{®} device of the EV which is to be used instead of the short-range wireless communication capability of the cellular mobile device.

15. The method according to any of the preceding method-based claims,
wherein the smart EVSE is configured to use an authentication process that is needed to synchronize time and upload data to also automatically unlock the smart EVSE for charging; and/or
wherein the short-range wireless communication capability of the cellular mobile device provides a solution for the issue of dealing with poor connectivity/clock drift and power cycles; and/or
wherein the short-range wireless communication capability of the cellular mobile device is based on a Bluetooth^{®} device or a ZigBee^{®} wireless interface between the EV and the smart EVSE.
